# FASCICULE DE BREVET EUROPEEN

(11) **EP 2 952 455 B1**
(45) Date de publication et mention de la délivrance du brevet: **01.08.2018**
(21) Numéro de dépôt: 15170377.4
(22) Date de dépôt: 03.06.2015
(51) Int. Cl.: B65G 47/08, B65G 47/71, B65G 47/84

(54) **RÉPARTITION MULTIFILAIRE À TAQUETS LATÉRAUX**
MEHRDRAHTIGE VERTEILUNG AN SEITLICHE STIFTE
MULTI-WIRE DISTRIBUTION WITH SIDE PINS

(30) Priorité: 04.06.2014 FR 1401284
(43) Date de publication de la demande: 09.12.2015
(60) Demande divisionnaire: 18174592.8
(73) Titulaire: C.E.R.M.E.X. CONSTRUCTIONS ETUDES ET RECHERCHES DE MATERIELS POUR L'EMBALLAGE D'EXPEDITION, 21910 Corcelles-les-Cîteaux (FR)
(72) Inventeur: RABEC, Dominique, 21910 CORCELLES LES CÎTEAUX (FR)
(74) Mandataire: Eltzer, Thomas

(56) Documents cités:
- US-A- 3 469 673
- US-A- 3 635 322
- US-A- 4 577 745
- US-A- 5 161 664
- US-A1- 2004 050 663

## Description

L'invention a trait au convoyage de produits alignés sur un ou plusieurs convoyeurs.

Elle concerne plus particulièrement une installation pour répartir sur au moins deux files des produits initialement alignés sur une seule file, positionnés sur un convoyeur.

On connaît du document FR 2 738 231 une installation qui comporte des moyens déflecteurs permettant de réaliser deux files de produits à partir d'une seule file. Les moyens déflecteurs comportent, d'une part, une courroie sans fin montée sur deux poulies d'axe vertical et disposée latéralement audit convoyeur et, d'autre part, un élément déflecteur fixé sur ladite courroie et suffisamment saillant pour pouvoir toucher les produits convoyés quand les moyens déflecteurs sont en position active. En particulier, l'élément déflecteur est réalisé par une succession de taquets ou train de taquets qui sont fixés côte-à-côte sur la courroie, de telle manière que, quand les moyens déflecteurs sont en position active, ils dévient transversalement un lot de produits alignés les uns derrières les autres. Une telle installation permet ainsi de créer des lots de produits répartis sur deux files. Une telle installation pourrait également permettre de dévier un produit sur deux en réduisant convenablement la cadence des produits sur le convoyeur, et éventuellement en réduisant la taille de l'élément déflecteur.

L'inconvénient d'une telle installation est qu'elle ne peut pas fonctionner à grande vitesse si les produits convoyés sont des produits instables, par exemple des produits légers qui présentent une hauteur bien plus importante que la largeur de leur base. Par exemple, les flacons tubulaires réalisés pour les aérosols sont instables et ils ont tendance à basculer et tomber lorsque l'on change leur trajectoire trop brusquement ou lorsque l'on fait varier leur vitesse de convoyage.

L'inconvénient d'une telle installation de répartition est également de devoir mettre en oeuvre une autre installation en amont, assurant la réalisation d'un écartement entre les produits ainsi qu'un dispositif de détection, placé en amont de l'installation de répartition, qui détecte les produits en entrée de l'installation pour coordonner le fonctionnement les moyens déflecteurs.

On connaît aussi du document US 3 469 673 une installation pour répartir sur au moins deux files des produits initialement alignés sur une seule file selon le préambule de la revendication 1 et un procédé de répartition des produits d'un convoyeur sur au moins deux files de produits selon le préambule de la revendication 7.

L'invention permet de pallier les inconvénients précités et notamment de la simplifier, tout en assurant des cadences plus élevées et un fonctionnement fiable même pour des produits peu stables.
Elle propose à cet effet une installation pour répartir sur au moins deux files, des produits initialement alignés sur une seule file, selon les caractéristiques de la revendication 1.

L'installation conforme à l'invention est remarquable en ce que le dispositif de répartition comporte au moins un second déviateur, pour décaler les produits transversalement à la direction d'amenée, disposé latéralement au convoyeur et en vis-à-vis du premier déviateur, les premier et second déviateurs étant agencés pour agir l'un après l'autre sur la file de produits, les premier et second déviateurs, à base d'actionneur ou encore de bande sans fin, agissant notamment transversalement dans des sens opposés.

L'installation conforme à l'invention peut également comporter les caractéristiques suivantes, prises séparément ou en combinaison :
- lesdits au moins un premier et second éléments déflecteurs comportent chacun plusieurs taquets disposés les uns à la suite des autres de sorte à former un train de taquets. De cette façon, on peut aisément faire varier la longueur des éléments déflecteurs en augmentant ou en réduisant le nombre de taquets dans chaque train de taquets. On peut ainsi dévier un ou plusieurs produits suivant la longueur des taquets et la longueur des trains de taquets ;
- lesdits au moins un premier et second éléments déflecteurs présentent une même longueur qui est sensiblement égale à la longueur d'un lot d'un plusieurs produits à former. Ainsi, les éléments déflecteurs dévient chacun des lots de produits de même longueur ;
- lesdites première et seconde bandes sans fin comportent chacune plusieurs éléments déflecteurs, espacés les uns des autres d'une distance sensiblement identique à leur longueur, de sorte que le déflecteur d'un déviateur puisse se trouver entre deux déflecteurs de l'autre déviateur ce qui permet alors de définir un espace de convoyage clos pour le lot. De cette façon, les lots de produits formés, de même longueur que la longueur des trains de taquets, s'insèrent entre deux trains de taquets d'un même déviateur ce qui favorise un bon maintien et guidage ;

- lesdits premier et second éléments déflecteurs présentent une largeur sensiblement égale à la moitié d'une largeur de la partie aval du convoyeur. De cette façon, les premier et seconds éléments déflecteurs peuvent constituer des parois latérales sur lesquelles les produits déviés peuvent prendre appui ;
- chacune desdites première et seconde bandes sans fin comporte une partie de bande parallèle à la direction d'amenée des produits, contigüe à ladite partie oblique, et en aval dans la direction de convoyage des produits. De cette façon, les produits déviés sont guidés par les deux déviateurs, après déviation de leur trajectoire initiale, avant d'être évacués ;
- la partie aval du convoyeur peut comporter au moins une paroi centrale de séparation desdites au moins deux files de produits. De cette façon, les produits alignés sur au moins deux files sont guidés en partie aval du convoyeur.

L'invention vise également un procédé de répartition des produits d'un convoyeur sur au moins deux files de produits, mettant en oeuvre une installation de répartition telle que définie ci avant.

Le procédé conforme à l'invention est remarquable en ce que les premier et second déviateur sont mis en oeuvre successivement pour répartir les produits en lots d'au moins un produit suivant lesdites au moins deux files sur le convoyeur, lesdits premier et second déviateurs étant entraînés par le déplacement longitudinal des produits assuré par le convoyeur.

Comme expliqué précédemment, c'est la mise en oeuvre successive des des déviateurs qui permet de pallier les inconvénients des solutions techniques de l'Etat de la Technique.

Le procédé conforme à l'invention peut également comporter les caractéristiques suivantes, prises séparément ou en combinaison :
- lesdits premier et second déviateurs sont dépendants l'un de l'autre dans leur fonctionnement. Ainsi, les deux déviateurs fonctionnent chacun en permanence et agissent alternativement sur les produits ;
- ladite vitesse d'entrainement du convoyeur est supérieure à 105 % de la vitesse d'entrainement des premier et second déviateurs dans la direction d'amenée. Une survitesse de 5% est suffisante pour permettre une accumulation de produits au touche à touche en amont du déviateur ;
- le procédé comporte une étape de guidage des lots de produits au sein du dispositif de répartition grâce aux volumes libres créés entre les déviateurs et où les produits peuvent être contenus. Ainsi, les produits instables sont stabilisés après avoir été déviés et avant d'être évacués des déviateurs.

Pour pouvoir être exécutée, l'invention est exposée de façon suffisamment claire et complète dans la description suivante qui est, en plus, accompagnée de dessins illustrant le cas particulier d'une déviation sur deux voies, dans lesquels :
- la figure 1 est une vue de dessus d'une installation conforme à l'invention illustrée de façon schématique,
- la figure 2 est également une vue de dessus d'une autre installation conforme à l'invention illustrée de façon schématique,
- la figure 3 montre une caractéristique possible liée au mouvement relatif des déviateurs

Dans la description qui suit, les termes « inférieur », « supérieur », « gauche », « droite » etc... sont utilisés en référence aux dessins pour une plus grande facilité de compréhension. Ils ne doivent pas être compris comme étant des limitations de la portée de l'invention.

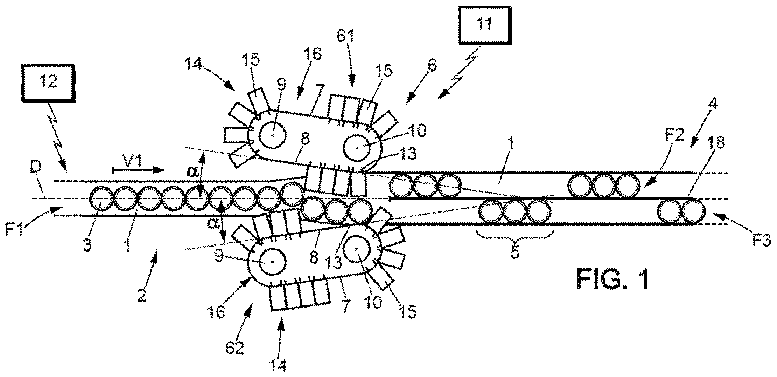

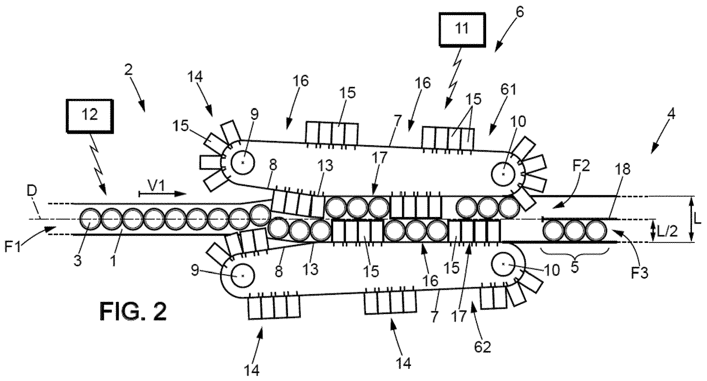

Les figures 1 et 2 montrent deux modes de réalisation d'une installation conforme à l'invention. Les installations ont en commun qu'elles comportent chacune un convoyeur 1, présentant une partie amont 2 où arrivent les produits 3 alignés les uns derrière les autres sur une file F1 et se touchant les uns et les autres, et une partie aval 4 où les produits sont déviés et préférablement répartis en lots 5, ou groupes, de produits 3, alignés sur deux files F2 et F3.

Les deux files F2 et F3 de lots de produits 3 en partie aval 4 se trouvent décalées de part et d'autre de la direction de la file F1 de produits de la partie amont 2 du convoyeur.

La direction de la file F1 correspond à la direction d'amenée D des produits 3 par le convoyeur 1.

Il devra être compris que le convoyeur 1 pourrait présenter une largeur constante entre la partie amont et la partie aval, sans toutefois sortir du cadre de l'invention. Pour cela, la largeur de convoyeur devra être telle qu'elle peut convoyer deux files F2 et F3 de produits 3 parallèles entre elles.

Le convoyeur 1 est entraîné en déplacement à une vitesse V1 qui est préférablement la même en amont et en aval. La vitesse à laquelle les produits 3 entrent dans l'installation (c'est-à-dire la vitesse d'amenée) est alors égale à la vitesse à laquelle ils sont évacués de l'installation.

Les produits 3 sont, par exemple, des boites, des bouteilles, des cannettes ou, de façon générale, toute sorte de flacons ou produit à déplacer.

Dans le cadre des exemples illustrés sur les figures 1 et 2, les lots de produits formés comportent chacun trois produits.

Il devra être entendu que l'installation n'est pas limitée à la formation de lots comportant trois produits, mais qu'elle s'étend à la formation de lots pouvant comporter plus ou moins de trois produits, chaque lot comportant toutefois préférablement au moins deux produits.

L'invention n'est pas davantage limitée à une répartition sur deux files de lots de produits. Une installation conforme à l'invention pourrait être agencée pour répartir les produits sur trois files voire plus.

L'installation comporte un dispositif de répartition 6 des produits 3 en lots 5 sur deux files F2 et F3, le dispositif de répartition 6 étant positionné entre la partie amont 2 et la partie aval 4 du convoyeur 1.

Plus exactement, le dispositif de répartition 6 comporte deux parties symétriques, disposées de part et d'autre du convoyeur 1.

Chacun des deux parties symétriques est un déviateur 61 ou 62, qui comporte une bande sans fin 7 disposée latéralement au convoyeur 1, qui comporte une partie oblique 8 par rapport à la direction d'amenée D. La partie oblique forme un angle aigu avec la direction d'amenée, l'angle étant ouvert vers l'amont des déviateurs 61 et 62.

Pour la compréhension de l'invention, la bande sans fin 7 illustrée au-dessus du convoyeur 1 sur les figures 1 et 2 sera appelée « première bande sans fin », et celle illustrée au-dessous du convoyeur 1 sera appelée « seconde bande sans fin ».

De même, le déviateur 61 illustrée au-dessus du convoyeur 1 sera appelé « premier déviateur », et le déviateur 62 illustré au-dessous du convoyeur 1 sera appelé « second déviateur ».

Chacune des bandes sans fin 7 entoure au moins deux roues parmi lesquelles une roue amont 9 et une roue aval 10.

La roue amont 9 est plus éloignée de l'axe médian du convoyeur que la roue aval 10.

Un autre module de commande 12 commande le déplacement du convoyeur 1, notamment sa vitesse d'avance V1.

La partie oblique 8 des première et seconde bandes sans fin 7 est disposée de sorte que son extrémité aval 13 jouxte le bord du convoyeur 1. De plus, les deux extrémités aval 13 des deux parties obliques 8 sont au droit l'une de l'autre au regard de la direction d'amenée des produits.

Les deux parties obliques 8 forment chacune un angle α compris entre 0 et 45 ° avec la direction d'amenée D des produits 3 du convoyeur 1. Dans le cas illustré sur les figures, l'angle α est de 9°.

Les bandes sans fin 7 des premier et second déviateurs 61 et 62 portent chacun, respectivement, au moins un premier et second élément déflecteur 14.

Dans l'exemple illustré en figure 1, chacune des bandes sans fin 7 porte trois éléments déflecteurs 14 qui agissent successivement.

Dans l'exemple illustré en figure 2, les bandes sans fin 7 sont plus longues et portent chacune six éléments déflecteurs 14.

Tous les éléments déflecteurs 14 des modes de réalisations représentés comportent plusieurs taquets 15 disposés les un à la suite des autre, accrochés uniquement à la bande sans fin 7, de sorte à former un train de taquets 15.

L'avantage de prévoir les éléments déflecteurs 14 sous forme de trains de taquets 15 est de permettre de changer aisément la longueur des éléments déflecteurs 14 en ajoutant ou en retirant un taquet 15. De plus, la maintenance des éléments déflecteurs 14 est facilitée, car si un taquet est défectueux, il est plus aisé de le remplacer que de remplacer tout l'élément déflecteur 14.

On remarquera que la longueur des trains de taquets 15 correspond sensiblement à la longueur occupée par chacun des lots 5 de produits 3 sur le convoyeur 1, ce qui permet à chaque élément déflecteur de servir de guide pour le lot de produits qu'il a dévié.

On remarquera également que l'espace 16 séparant deux trains de taquets 15 sur les bandes sans fin 7 est également sensiblement égal à la longueur des trains de taquets 15 et des lots 5 de produits 3, ce qui permet à deux déflecteurs successifs d'un même déviateur de servir de délimitations longitudinales à l'espace disponible pour les produits déviés par l'autre déviateur.

En effet, et comme il sera expliqué par la suite, les espaces 16 séparant deux trains de taquets 15 successifs ont une fonction technique en rapport avec l'instabilité des produits 3 convoyés.

Les éléments déflecteurs 14 présentent une largeur qui est fonction de la largeur de la partie aval 4 du convoyeur 1.

Dans le cadre des deux exemples illustrés sur les figures 1 et 2, la largeur des éléments déflecteurs 14 (qui correspond à la hauteur des taquets 15 entre leur extrémité fixée à la bande sans fin 7 et l'extrémité libre orientée vers le convoyeur 1) est sensiblement égale à la moitié (L/2) de la largeur L de la partie aval 4 du convoyeur 1.

L'avantage d'une telle caractéristique de largeur L/2 des éléments déflecteurs 14 sera expliqué par la suite. Cette caractéristique est également en lien avec le convoyage de produits 3 instables.

Dans l'exemple d'installation illustré sur la figure 2 le dispositif déviateur assure une étape de guidage des lots 5 de produits 3 formés, répartis sur les deux files F2 et F3, suivant une direction parallèle la direction d'amenée D avant même que les lots 5 de produits 3 ne soient évacués du dispositif de répartition 6.

Pour ce faire, suivant l'installation montrée en figure 2, les bandes sans fin 7 des déviateurs 61 et 62 comportent une partie 17 de bande qui est parallèle à la direction d'amenée D. Dans le cadre de cet exemple, la partie 17 de bande est également parallèle aux bords du convoyeur 1. Les parties 17 sont contigües aux parties obliques 8.

Dans les deux exemples illustrés, les parties aval des convoyeurs 1 présentent chacune une paroi centrale 18 qui sépare les deux files F1 et F2 de lots 5 de produits 3.

Il va maintenant être fait référence à un procédé de mise en oeuvre des deux installations illustrées sur les figures 1 et 2, le procédé étant conforme au procédé selon l'invention.

Initialement, au démarrage de l'installation, les deux déviateurs 61 et 62 du dispositif de répartition 6 sont à l'arrêt, ainsi que le convoyeur 1.

Le convoyeur 1 est entrainé en déplacement à une vitesse V1 par commande du module de commande 12.

Les produits 3 sont disposés sur la partie amont 2 du convoyeur 1 sous la forme d'une file F1 de produits 3. Ils peuvent arriver au niveau du dispositif de répartition 6 de façon quelconque, ou bien à intervalles réguliers.

Lorsque le premier produit 3 de la file F1 de produits 3 arrive au niveau du dispositif de répartition 6, il vient buter contre le dernier taquet 15 d'un train de taquets 15 du premier déviateur 61 (ou du second déviateur 62) qui arrête le produit 3 dans sa course. Les produits 3 suivants de la file F1 s'accumulent alors derrière le premier produit 3 arrêté par le taquet 15 sous l'effet de la survitesse du convoyeur 1. Les produits 3 forment alors une file F1 de produits au touche à touche, accumulés les uns derrière les autres depuis un élément déflecteur 14.

Le dispositif de répartition 6 est alors mis en fonctionnement, par commande du module de commande 11. La mise en fonctionnement du dispositif de répartition 6 entraine le mouvement des deux bandes sans fin des premier et second déviateurs 61 et 62. En effet, les deux déviateurs 61 et 62 fonctionnent ensemble : ils ne sont pas utilisables indépendamment l'un de l'autre suivant ce mode de réalisation.

De plus, les bandes sans fin 7 des premier et second déviateurs 61 et 62 avancent à des vitesses identiques.

Lorsque les premier et second déviateurs sont actionnés, les premier et second éléments déflecteurs 14 qu'ils comportent sont mis en oeuvre successivement (ou alternativement, à tour de rôle, dans les cas où il n'y a que deux déviateurs) sur le convoyeur 1, car les éléments déflecteurs 14 sont décalés l'un par rapport à l'autre, transversalement au convoyeur 1, quand les éléments déflecteurs 14 se trouvent sur le convoyeur 1 (voir précédemment).

Ainsi, concernant l'installation montrée en figure 1, lorsqu'un élément déflecteur 14 du premier déviateur 61 s'introduit sur le convoyeur, l'élément déflecteur 14 du second déviateur 62 s'apprête à être évacué du convoyeur 1.

Concernant l'installation montrée en figure 2, lorsqu'un élément déflecteur du premier déviateur 61 s'introduit sur le convoyeur 1, l'élément déflecteur 14 du second déviateur 62 se trouve plus en aval.

De façon plus précise, l'extrémité amont d'un élément déflecteur 14 du premier déviateur 61 coïncide à peu près avec l'extrémité aval d'un élément déflecteur 14 du second déviateur 62, ou inversement. De cette façon, quand les bandes sans fin 7 des deux déviateurs 61 et 62 sont entrainées en déplacement, les éléments déflecteurs 14 des deux bandes sans fin 7 ne se font jamais face sur le convoyeur mais se suivent.

Comme les éléments déflecteurs des deux bandes sont sensiblement de même longueur, et comme les espaces laissés entre deux éléments déflecteurs consécutifs sont d'une longueur sensiblement égale, un élément déflecteur du premier déviateur 61 fait face à un espace vide 16 entre deux éléments déflecteurs 14 du second déviateur, lorsque les éléments déflecteurs 14 se trouvent sur le convoyeur 1.

Lorsque le dispositif de répartition est mis en oeuvre, le produit 3 en tête de file F1 prend appui sur le bord aval du premier élément déflecteur 14 qu'il rencontre dans sa course. Le produit 3 de tête est ainsi référencé.

Comme l'extrémité aval d'un élément déflecteur 14 d'un déviateur coïncide essentiellement avec l'extrémité amont d'un élément déflecteur 14 de l'autre déviateur, le produit 3 de file F1 et les produits 3 qui se trouvent juste derrière le produit 3 de la file, référencé par appui contre un élément déflecteur 14, par exemple, se trouvent également à hauteur de l'élément déflecteur 14 de l'autre déviateur 62.

En étant entrainé en déplacement, les bandes sans fin 7 entraînent également en déplacement les trains de taquets 15 (ou élément déflecteur 14).

Le train de taquets 15 du déviateur 62 pousse latéralement chaque produit 3, sur la moitié gauche du convoyeur formant la file F2.

Le dernier taquet du train de taquets 15 du déviateur 62 poussant les produits 3 vient alors rencontrer, à son tour, un produit de file F1 qu'il référence.

Le train de taquets 15 du déviateur 61 pousse alors latéralement un lot de produit 3 sur la moitié droite du convoyeur 1 formant la file F3.

Et ainsi de suite.

Comme les espaces 16 entre les éléments déflecteurs 14 d'un premier déviateur présentent une longueur sensiblement égale à la longueur des lots 5 de produits déviés par les éléments déflecteurs 14 de l'autre déviateur, chaque lot 5 de produits 3 dévié est inséré entre deux éléments déflecteurs 14 d'un déviateur. Chaque lot 5 de produits 3 est alors encadré par deux éléments déflecteurs 14 d'un même déviateur 61 ou 62, à l'avant et à l'arrière du lot, et chaque lot est encadré latéralement par une partie 17 de bande sans fin et l'élément déflecteur 14 de l'autre déviateur (61 ou 62). Ainsi, les produits 3, même instables, sont maintenus lors de leur positionnement sur deux voies.

L'invention peut ainsi permettre de créer et stabiliser des lots de produits.

En sortie du dispositif de répartition 6, les lots 5 de produits 3 sont évacués par escamotage des trains de taquets 15, compte tenu de la rotation autour d'un arbre de retour.

On rappelle que la vitesse V1 d'avance du convoyeur 1 est supérieure à la vitesse longitudinale des déviateurs. Les lots 5 de produits 3 qui sont formés sont donc légèrement freinés dans leur course par le dispositif de répartition 6.

Lorsque le dernier taquet d'un train de taquets 15, situé devant un lot 5 de produit, est escamoté, il n'existe plus aucun frein, et le lot 5 de produits est alors de nouveau entraîné en déplacement à une vitesse d'avance V1 qui est celle du convoyeur 1.

Le lot 5 de produits s'éloigne alors rapidement de l'élément déflecteur 14 du train de taquets qui le suit en aval.

Grâce à cette accélération, le premier taquet du train de taquets 15 qui suit le dernier produit 3 du lot 5 ne pousse pas le dernier produit 3, de sorte qu'il n'y a aucun déséquilibre du dernier produit 3 susceptible de déséquilibrer à son tour le lot 5 de produits formé.

Par ailleurs, des espaces plus grands se créent entre les lots de produits sur la partie aval 4 du convoyeur 1.

Dans des réalisations possibles, qui peuvent aisément se comprendre avec la figure 2, le dispositif de répartition 6 n'est pas motorisé, ce qui signifie que les déviateurs 61, 62, ne sont pas entraînés par une motorisation active externe, du type motorisation d'entraînement d'une courroie ou bande 7 sur laquelle sont montés les déflecteurs 14. Le mouvement des déflecteurs 14 dans la direction d'amenée D est alors provoqué par contact avec les produits 3 eux-mêmes, ces produits 3 étant mis en mouvement par le convoyeur 1 sur lequel ils reposent. On obtient une configuration simple, robuste et peu couteuse, où c'est le convoyeur 1 qui assure le déplacement longitudinal des produits 3, ce déplacement longitudinal entraînant ensuite les déviateurs 61, 62, et plus particulièrement leurs déflecteurs 14. La position transversale des déflecteurs 14 dépendant de leur position longitudinale, leur avance longitudinale a pour effet de les déplacer transversalement et de donc décaler transversalement les produits 3 entrants, comme il a été décrit.

Entre deux déflecteurs 14 successifs, rattachés respectivement à deux déviateurs 61, 62 différents, les produits 3 sont donc en colonne compacte, en contact contre le déflecteur 14 devant eux en aval dans le sens du flux de produits 3. Les produits 3 en lots, placés entre deux déflecteurs 14 successifs, agissent donc mécaniquement par contact sur le déflecteur 14 devant eux, en aval dans le sens du flux, et l'entraînent dans leur déplacement, provoqué par le convoyeur 1. Les déflecteurs 14 d'un même déviateur 61, 62 étant reliés, déplacer l'un d'eux a pour effet de déplacer les autres. Ainsi, l'entraînement longitudinal de l'un des déflecteurs 14 provoque à son tour le déplacement longitudinal des autres déflecteurs 14 du même déviateur 61, 62. L'avance du premier déflecteur 14 dans le sens de la direction d'amenée s'accompagnant, par construction, de son avance transversale en direction du deuxième déflecteur 14, opposé, les produits 3 sont déviés transversalement par le premier déflecteur 14 en direction du deuxième. Bien entendu, plusieurs lots de produits 3 peuvent simultanément pousser plusieurs déflecteurs 14 du même déviateur.

Ainsi, dans ces configurations, les déviateurs 61, 62 ne sont pas motorisés mais entraînés dans leur mouvement par la poussée des produits (3) sur le convoyeur 1 qui les entraîne.

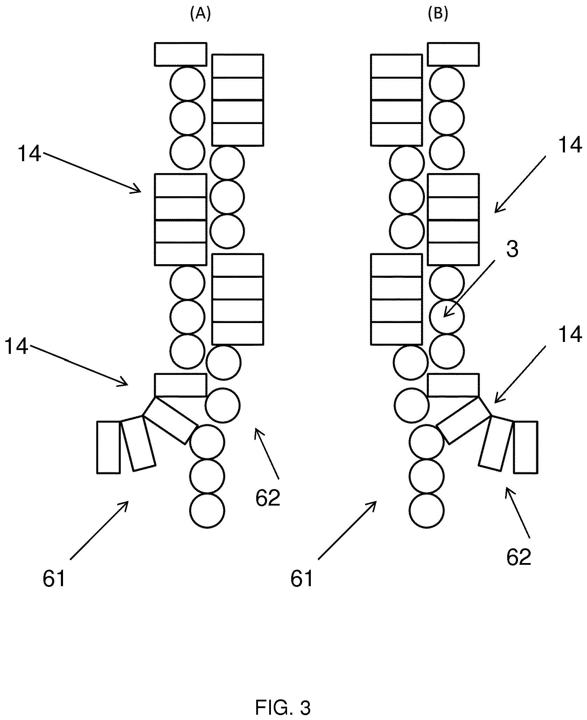

Selon une autre caractéristique avantageuse possible, illustrée en figure 3, un mouvement relatif longitudinal est possible entre les déviateurs 61, 62, et, plus particulièrement entre leurs déflecteurs 14 : les déviateurs 61, 62 peuvent être déplacés l'un par rapport à l'autre dans la zone où ils se font face, plus particulièrement dans la direction d'amenée. On comprend que dans la zone où les déviateurs 61, 62 se font face, et dans laquelle circulent, entre les deux déviateurs 61, 62, les produits 3 déviés, les déflecteurs 14 de chaque déviateur circulent sensiblement à la même vitesse, cadencée par la vitesse à laquelle arrivent les produits en entrée. Certains modes de réalisations sont toutefois tels que, dans la zone centrale où ils se font face, le contrôle des déviateurs 61 62 et leur montage sont tels que la vitesse des déflecteurs 14 d'un déviateur 61 peut être différente de celle des déflecteurs 14 de l'autre déviateur 62, au moins ponctuellement. Ainsi, grâce à cette mobilité relative, il est possible de générer ou augmenter, dans cette zone centrale, un décalage longitudinal dans la direction d'amenée entre les déflecteurs 14 d'un déviateur 61 et ceux de l'autre déviateur 62 pour écarter leurs déflecteurs 14 à l'occasion du transfert latéral de produits 3. Les mouvements des déviateurs 61 et 62 sont donc au moins partiellement indépendants. Grâce à ce décalage longitudinal, les déflecteurs 14 ne se superposent alors plus dans la direction d'amenée à l'endroit de la déviation. Cette possibilité de mouvement relatif longitudinal permet d'éviter les coincements, comme décrit ci-dessous en lien avec la figure 3.

Lorsque qu'un premier déflecteur 14 d'un premier déviateur 61, à gauche dans la figure 3A, arrive contre des produits 3 qu'il doit décaler transversalement, on utilise la possibilité de mouvement relatif dans la direction d'amenée pour provoquer ou augmenter un espace longitudinal entre ce premier déflecteur 14 et le déflecteur 14 précédent, juste en aval dans le sens du flux, et donc appartenant au deuxième déviateur 62 en vis-à-vis, à droite dans la figure 3A, pour les écarter suffisamment. Ce décalage longitudinal peut se faire en ralentissant le premier déviateur 61 en approche et/ou en accélérant le deuxième déviateur 62 dont le dernier déflecteur 14 a déjà agi sur les produits 3. Préférablement, on accélère le deuxième déviateur 62 qui vient d'agir, à droite dans la figure 3A.

Cet espace longitudinal est aussi créé lors de l'opération suivante, illustrée en figure 3B. Lorsque le premier déflecteur 14, à gauche dans la figure 3B, a entièrement décalé transversalement les produits 3 et qu'un deuxième déflecteur 14 du deuxième déviateur 62 en vis-à-vis, à droite dans la figure 3B, arrive à son tour pour dévier transversalement un lot de produits 3, on effectue l'opération inverse, à savoir créer un espace entre ce deuxième déflecteur 14, à droite dans la figure 3B, et le premier déflecteur 14 du premier déviateur 61, à gauche dans la figure 3B. Comme le montre la figure 3, on inverse donc successivement la position relative en avance ou en retard des premier et deuxième déviateurs 61, 62 : en zone centrale c'est alternativement chaque déviateur 61 qui est amené devant l'autre, au fil des lots à décaler alternativement d'un côté puis l'autre.

Cet espace longitudinal réduit de façon significative les problèmes de coincement qui peuvent se manifester quand la colonne de produits 3 est poussée transversalement par un déflecteur 14 vers un autre en vis-à-vis et qui le précède.

Ainsi, les premier et second déviateurs 61, 62 peuvent être déplacés l'un par rapport à l'autre dans la zone où ils se font face, les déviateurs 61, 62 étant écartés longitudinalement l'un de l'autre lorsque l'un d'eux entame son action de déviation transversale. Lors de ces variations de vitesse, on conserve toutefois préférablement la survitesse du convoyeur par rapport aux déflecteurs 14, les produits 3 restant donc, malgré les variations de vitesse, toujours au contact du déflecteur 14 juste devant eux, en aval dans le sens du flux.

## Revendications

1. Installation pour répartir sur au moins deux files (F2, F3) des produits (3) initialement alignés sur une seule file (F1), ladite installation comportant :
un convoyeur (1) présentant une partie amont (2) et une partie aval (4), ladite partie amont (2) étant apte à convoyer ladite seule file (F1) de produits (F1), suivant une direction d'amenée (D) et une vitesse d'amenée (V1), et ladite partie aval (4) étant apte à convoyer lesdits produits (3) répartis sur lesdites au moins deux files (F2, F3),
un dispositif de répartition (6), placé entre la partie amont (2) et la partie aval (4) du convoyeur (1), le dispositif de répartition (6) comportant un premier déviateur (61) pour décaler les produits transversalement à la direction d'amenée (D), disposé latéralement au convoyeur (1)
le dispositif de répartition (6) comportant au moins un second déviateur (62), pour décaler les produits transversalement à la direction d'amenée (D), disposé latéralement au convoyeur (1) et en vis-à-vis du premier déviateur (61),
les premier et second déviateurs (61, 62) étant agencés pour agir l'un après l'autre sur la file de produits,
le premier déviateur (61) et le second déviateur (62) comportant chacun au moins un élément déflecteur (14) pour dévier au moins un produit (3),
le premier déviateur (61) comprenant une bande (7) sans fin présentant au moins une partie (8) agencée en oblique par rapport à la direction d'amenée (D) du convoyeur (1) pour pousser les produits (3) transversalement, la partie oblique formant un angle aigu avec la direction d'amenée (D), l'angle étant ouvert vers la partie amont (2), et sur laquelle est monté le au moins premier élément déflecteur (14) apte à dévier au moins un produit (3), le deuxième déviateur comprenant lui aussi une bande (7) sans fin présentant au moins une partie (8) agencée en oblique par rapport à la direction d'amenée (D) du convoyeur (1) pour pousser les produits (3) transversalement, la partie oblique formant un angle aigu avec la direction d'amenée, l'angle étant ouvert vers la partie amont (2), et sur laquelle est monté le au moins second élément déflecteur (14) apte à dévier au moins un produit (3), les premier et second déviateurs (61, 62) étant agencés en miroir l'un de l'autre et pour mettre en oeuvre successivement lesdits au moins un premier et second éléments déflecteurs (14) sur ledit convoyeur (1),
l'installation étant **caractérisée en ce que** :
les déviateurs (61, 62) ne sont pas motorisés mais entraînés dans leur mouvement par la poussée des produits (3) sur le convoyeur (1) qui les entraîne.

2. Installation selon la revendication 1, **caractérisée en ce que** lesdits au moins un premier et second éléments déflecteurs (14) comportent chacun plusieurs taquets (15) disposés les uns à la suite des autres de sorte à former un train de taquets (15).

3. Installation selon la revendication 1 ou 2, **caractérisée en ce que** lesdits au moins un premier et second éléments déflecteurs (14) présentent une même longueur qui est sensiblement égale à la longueur d'un lot (5) d'un ou plusieurs produits (3) à former.

4. Installation selon l'une quelconque des revendications 1 à 3, **caractérisée en ce que** lesdites première et seconde bandes (7) sans fin comportent chacune plusieurs éléments déflecteurs (14), espacés les uns des autres d'une distance sensiblement identique à leur longueur, de sorte que le déflecteur (14) d'un déviateur puisse se trouver entre deux déflecteurs (14) de l'autre déviateur ce qui permet alors de définir un espace de convoyage clos pour le lot (5).

5. Installation selon l'une quelconque des revendications 1 à 4, **caractérisée en ce que** lesdits premier et second éléments déflecteurs (14) présentent une largeur sensiblement égale à la moitié d'une largeur (L) de la partie aval du convoyeur (1).

6. Installation selon l'une quelconque des revendications 1 à 5, **caractérisée en ce que** chacune desdites première et seconde bandes (7) sans fin comporte une partie (17) de bande parallèle à la direction d'amenée (D) des produits, contigüe à ladite partie (8) oblique, et en aval dans la direction de convoyage des produits (3).

7. Procédé de répartition des produits (3) d'un convoyeur (1) sur au moins deux files (F2, F3) de produits (3), mettant en oeuvre une installation de répartition selon l'une quelconque des revendications précédentes, procédé **caractérisé en ce que** les premier et second déviateur (61, 62) sont mis en oeuvre successivement pour répartir les produits (3) en lots (5) d'au moins un produit (3) suivant lesdites au moins deux files (F2, F3) sur le convoyeur (1), lesdits premier et second déviateurs (61, 62) étant entraînés par le déplacement longitudinal des produits (3) assuré par le convoyeur (1).

8. Procédé selon la revendication 7, **caractérisé en ce que** le convoyeur est entraîné à une vitesse d'amenée (V1) qui est supérieure à une vitesse d'entrainement desdits premier et second déviateurs (61, 62) dans la direction d'amenée (D).

9. Procédé selon la revendication 7 ou 8, **caractérisé en ce que** lesdits premier et second déviateurs (61, 62) sont dépendants l'un de l'autre dans leur fonctionnement.

10. Procédé selon l'une quelconque des revendications 7 à 9 **caractérisé en ce que** ladite vitesse (V1) d'entrainement du convoyeur (1) est supérieure à 105 % de la vitesse d'entrainement des premier et second déviateurs (61, 62) dans la direction d'amenée (D).

11. Procédé selon l'une quelconque des revendications 7 à 10, **caractérisé en ce que** il comporte une étape de guidage des lots (5) de produits (3) au sein du dispositif de répartition (6), grâce aux volumes libres créés entre les déviateurs (61, 62) et où les produits (3) peuvent être contenus.

## Patentansprüche

1. Anlage, um auf mindestens zwei Reihen (F2, F3) Produkte (3) zu verteilen, die anfänglich auf nur einer Reihe (F1) ausgerichtet waren, wobei die Anlage umfasst:
einen Förderer (1), der einen stromaufwärtigen Teil (2) und einen stromabwärtigen Teil (4) aufweist, wobei der stromaufwärtige Teil (2) geeignet ist, die einzige Reihe (F1) von Produkten (F1) entlang einer Zuführrichtung (D) und mit einer Zuführgeschwindigkeit (V1) zu befördern, und wobei der stromabwärtige Teil (4) geeignet ist, die auf den mindestens zwei Reihen (F2, F3) verteilten Produkte (3) zu befördern,
eine Verteilungsvorrichtung (6), die zwischen dem stromaufwärtigen Teil (2) und dem stromabwärtigen Teil (4) des Förderers (1) angeordnet ist, wobei die Verteilungsvorrichtung (6) einen ersten Abweiser (61), um die Produkte quer zur Zuführrichtung (D) zu versetzen, umfasst, der seitlich am Förderer (1) angeordnet ist,
wobei die Verteilungsvorrichtung (6) mindestens einen zweiten Abweiser (62), um die Produkte quer zur Zuführrichtung (D) zu versetzen, umfasst, der seitlich am Förderer (1) und gegenüber dem ersten Abweiser (61) angeordnet ist,
wobei der erste und der zweite Abweiser (61, 62) angeordnet sind, um nacheinander auf die Produktreihe einzuwirken,
wobei der erste Abweiser (61) und der zweite Abweiser (62) jeweils mindestens ein Ablenkelement (14) umfassen, um mindestens ein Produkt (3) abzulenken,
wobei der erste Abweiser (61) ein Endlosband (7) umfasst, das mindestens einen Teil (8) aufweist, der schräg zur Zuführrichtung (D) des Förderers (1) angeordnet ist, um die Produkte (3) quer zu schieben, wobei der schräge Teil einen spitzen Winkel mit der Zuführrichtung (D) bildet, wobei der Winkel zum stromaufwärtigen Teil (2) offen ist, und
auf dem das mindestens erste Ablenkelement (14) montiert ist, das geeignet ist, mindestens ein Produkt (3) abzulenken, wobei der zweite Abweiser ebenfalls ein Endlosband (7) umfasst, das mindestens einen Teil (8) aufweist, der schräg zur Zuführrichtung (D) des Förderers (1) angeordnet ist, um die Produkte (3) quer zu schieben, wobei der schräge Teil einen spitzen Winkel mit der Zuführrichtung bildet, wobei der Winkel zum stromaufwärtigen Teil (2) offen ist, und auf dem das mindestens zweite Ablenkelement (14) montiert ist,
das geeignet ist, mindestens ein Produkt (3) abzulenken, wobei die ersten und zweiten Abweiser (61, 62) zueinander spiegelverkehrt angeordnet sind und angeordnet sind, um nacheinander die mindestens einen ersten und zweiten Ablenkelemente (14) auf dem Förderer (1) einzusetzen,
wobei die Anlage **dadurch gekennzeichnet ist, dass** die Abweiser (61, 62) nicht motorisiert sind, sondern in ihrer Bewegung durch den Schub der Produkte (3) auf dem Förderer (1), der sie mitnimmt, angetrieben werden.

2. Anlage nach Anspruch 1, **dadurch gekennzeichnet, dass** die mindestens einen ersten und zweiten Ablenkelemente (14) jeweils mehrere Mitnehmer (15) umfassen, die nacheinander angeordnet sind, um einen Mitnehmerzug (15) zu bilden.

3. Anlage nach Anspruch 1 oder 2, **dadurch gekennzeichnet, dass** die mindestens einen ersten und zweiten Ablenkelemente (14) eine selbe Länge aufweisen, die im Wesentlichen gleich der Länge einer Charge (5) eines oder mehrerer zu formender Produkte (3) ist.

4. Anlage nach einem der Ansprüche 1 bis 3, **dadurch gekennzeichnet, dass** die ersten und zweiten Endlosbänder (7) jeweils mehrere Ablenkelemente (14) umfassen, die zueinander um einen Abstand im Wesentlichen identisch mit ihrer Länge beabstandet sind, so dass das Ablenkelement (14) eines Abweisers zwischen zwei Ablenkelementen (14) des anderen Abweisers angeordnet sein kann, wodurch es möglich ist, einen geschlossenen Förderraum für die Charge (5) zu definieren.

5. Anlage nach einem der Ansprüche 1 bis 4, **dadurch gekennzeichnet, dass** die ersten und zweiten Ablenkelemente (14) eine Breite im Wesentlichen gleich der Hälfte einer Breite (L) des stromabwärtigen Teils des Förderers (1) aufweisen.

6. Anlage nach einem der Ansprüche 1 bis 5, **dadurch gekennzeichnet, dass** jedes der ersten und zweiten Endlosbänder (7) einen Bandteil (17) parallel zur Zuführrichtung (D) der Produkte aufweist, der an den schrägen Teil (8) angrenzt und sich stromabwärts zur Förderrichtung der Produkte (3) befindet.

7. Verfahren zum Verteilen der Produkte (3) eines Förderers (1) auf mindestens zwei Reihen (F2, F3) von Produkten (3), das eine Verteilungsanlage nach einem der vorhergehenden Ansprüche einsetzt, wobei das Verfahren **dadurch gekennzeichnet ist, dass** die ersten und zweiten Abweiser (61, 62) nacheinander eingesetzt werden, um die Produkte (3) in Chargen (5) von mindestens einem Produkt (3) entlang der mindestens zwei Reihen (F2, F3) auf dem Förderer (1) zu verteilen, wobei die ersten und zweiten Abweiser (61, 62) durch die Längsverschiebung der Produkte (3), die durch den Förderer (1) gewährleistet wird, angetrieben werden.

8. Verfahren nach Anspruch 7, **dadurch gekennzeichnet, dass** der Förderer mit einer Zuführgeschwindigkeit (V1) angetrieben wird, die größer als eine Antriebsgeschwindigkeit der ersten und zweiten Abweiser (61, 62) in Zuführrichtung (D) ist.

9. Verfahren nach Anspruch 7 oder 8, **dadurch gekennzeichnet, dass** die ersten und zweiten Abweiser (61, 62) voneinander in ihrer Funktion abhängig sind.

10. Verfahren nach einem der Ansprüche 7 bis 9, **dadurch gekennzeichnet, dass** die Antriebsgeschwindigkeit (V1) des Förderers (1) höher als 105 % der Antriebsgeschwindigkeit der ersten und zweiten Abweiser (61, 62) in Zuführrichtung (D) ist.

11. Verfahren nach einem der Ansprüche 7 bis 10, **dadurch gekennzeichnet, dass** es einen Schritt der Führung der Chargen (5) von Produkten (3) innerhalb der Verteilungsvorrichtung (6) dank der freien Volumina, die zwischen den Abweisern (61, 62) erzeugt sind, und in denen die Produkte (3) enthalten sein können, umfasst.

## Claims

1. Installation for distributing into at least two files (F2, F3) products (3) initially aligned in a single file (F1), the said installation comprising:
a conveyor (1) having an upstream part (2) and a downstream part (4), the said upstream part (2) being able to convey the said single file (F1) of products (F1) in a conveying direction (D) at a conveying speed (V1), and the said downstream part (4) being able to convey the said products (3) distributed in the said at least two files (F2, F3), a distribution device (6), placed between the upstream part (2) and the downstream part (4) of the conveyor (1), the distribution device (6) comprising a first diverter (61) for offsetting the products transversely to the conveying direction (D) and positioned laterally with respect to the conveyor (1),
the distribution device (6) comprising at least one second diverter (62) for offsetting the products transversely to the conveying direction (D) and positioned laterally with respect to the conveyor (1) and facing the first diverter (61),
the first and second diverters (61, 62) being arranged to act one after the other on the file of products,
the first diverter (61) and the second diverter (62) each comprising at least one deflecting element (14) for deflecting at least one product (3),
the first diverter (61) comprising an endless belt (7) exhibiting at least one part (8) arranged obliquely with respect to the conveying direction (D) of the conveyor (1) so as to push the products (3) transversely, the oblique part forming an acute angle with the conveying direction (D), the angle being open towards the upstream part (2), and on which the at least first deflecting element (14) able to deflect at least one product (3) is mounted,
the second diverter likewise comprising an endless belt (7) exhibiting at least one part (8) arranged obliquely with respect to the conveying direction (D) of the conveyor (1) so as to push the products (3) transversely, the oblique part forming an acute angle with the conveying direction, the angle being open towards the upstream part (2) and on which the at least second deflecting element (14) able to deflect at least one product (3) is mounted, the first and second diverters (61, 62) being arranged as a mirror image of one another and to employ the said at least one first and second deflecting elements (14) on the said conveyor (1) in succession,
the installation being **characterized in that**:
the diverters (61, 62) are not motorized but are driven in their movement by pressure from the products (3) on the conveyor (1) which drives them.

2. Installation according to Claim 1, **characterized in that** the said at least one first and second deflecting elements (14) each comprise several pins (15) arranged one after another so as to form a string of pins (15).

3. Installation according to Claim 1 or 2, **characterized in that** the said at least one first and second deflecting elements (14) have the same length which is substantially equal to the length of a batch (5) of one or more products (3) that is to be formed.

4. Installation according to any one of Claims 1 to 3, **characterized in that** the said first and second endless belts (7) each comprise several deflecting elements (14) spaced apart from one another by a distance substantially equal to their length, so that the deflector (14) of one diverter can lie between two deflectors (14) of the other diverter, thus making it possible to define a closed conveying space for the batch (5).

5. Installation according to any one of Claims 1 to 4, **characterized in that** the said first and second deflecting elements (14) have a width substantially equal to half a width (L) of the downstream part of the conveyor (1).

6. Installation according to any one of Claims 1 to 5, **characterized in that** each of the said first and second endless belts (7) comprises a belt part (17) parallel to the direction (D) of conveying of the products, contiguous with the said oblique part (8), and downstream in the direction of conveying of the products (3).

7. Method for distributing the products (3) of a conveyor (1) into at least two files (F2, F3) of products (3), employing a distribution installation according to any one of the preceding claims, which method is **characterized in that** the first and second diverter (61, 62) are employed in succession in order to distribute the products (3) into batches (5) of at least one product (3) following the said at least two files (F2, F3) on the conveyor (1), the said first and second diverters (61, 62) being driven by the longitudinal movement of the products (3) which is brought about by the conveyor (1).

8. Method according to Claim 7, **characterized in that** the conveyor is driven at a conveying speed (V1) which is higher than a speed at which the said first and second diverters (61, 62) are driven in the conveying direction (D).

9. Method according to Claim 7 or 8, **characterized in that** the said first and second diverters (61, 62) are dependent on one another in their operation.

10. Method according to any one of Claims 7 to 9, **characterized in that** the said speed (V1) at which the conveyor (1) is driven is greater than 105% of the speed at which the first and second diverters (61, 62) are driven in the conveying direction (D).

11. Method according to any one of Claims 7 to 10, **characterized in that** it comprises a step of guiding batches (5) of products (3) within the distribution device (6), using the empty volumes created between the diverters (61, 62) and in which the products (3) can be contained.
